# EUROPÄISCHE PATENTANMELDUNG

(11) **EP 4 779 168 A1**
(43) Veröffentlichungstag der Anmeldung: **22.07.2026**
(21) Anmeldenummer: 25152736.2
(22) Anmeldetag: 20.01.2025
(51) Int. Cl.: F16D 3/18, F16H 57/04

(54) **VERSCHLEISSARME VERZAHNUNGSANORDNUNG ZUR LASTÜBERTRAGUNG**

(71) Anmelder: Flender GmbH, 46395 Bocholt (DE)
(72) Erfinder: DINTER, Ralf Martin, 46395 Bocholt (DE)
(74) Vertreter: Michalski Hüttermann & Partner mbB

(57) **Zusammenfassung**

Es ist eine Verzahnungsanordnung zur Lastübertragung vorgesehen mit einem ersten Zahn (22) zum Einleiten einer Last und einem an dem ersten Zahn (22) an einer Abstützfläche (24) abstützbaren zweiten Zahn zum Ausleiten der Last, wobei der erste Zahn (22) und/oder der zweite Zahn zumindest in der Abstützfläche (24) mit einem Festschmierschichtsystem (26) versehen ist, wobei das Festschmierschichtsystem (26) eine mindestens ein metallisches Element aufweisende innere Reservoirschicht (30) und eine eine Außenseite (34) des Festschmierschichtsystems (26) bildende Deckschicht (32) aufweist, wobei die Deckschicht (32) als Festschmierstoff ein aus dem metallischen Element der Reservoirschicht (30) gebildetes Metalloxid aufweist. Bei den typischen Betriebsbedingungen in der Verzahnungsanordnung kann durch Tribooxidation der metallischen Elemente aus der Reservoirschicht (30) der Festschmierstoff in der Deckschicht (32) leicht regeneriert werden, so dass eine verschleißarm geschmierte Verzahnungsanordnung ermöglicht ist.

## Beschreibung

Die Erfindung betrifft eine Verzahnungsanordnung, mit dessen Hilfe eine statische und/oder dynamische Lastübertragung erfolgen kann, sowie ein derartiges Getriebe, eine derartige Zahnkupplung und derartige Verwendungen. Die Erfindung betrifft zudem ein Datenagglomerat zur virtuellen Abbildung einer derartigen Verzahnungsanordnung zum Zwecke der additiven Fertigung und/oder Simulation.

WO 2015/135832 A1 zeigt eine Zahnkupplung mit lastübertragenden Verzahnungen, bei der die jeweilige Verzahnung eine Innenverzahnung und eine mit der Innverzahnung zur Übertragung der Last verzahnte Außenverzahnung aufweist.

Es ist bekannt Zahnkupplungen durch Schmieröl oder Schmierfett zu schmieren.

Es ist bekannt flüssigen Schmierstoffen, beispielsweise Schmieröl, partikelförmige Festschmierstoffe, beispielsweise Graphit oder MoS₂, beizumischen, um die Schmiereigenschaften zu verbessern und die Reibung zwischen den geschmierten Reibungspartner zu reduzieren.

Aus Konopka, D.; Pape, F.; Heimes, N.; Behrens, B.-A.; Möhwald, K.; Poll, G. "Functionality Investigations of Dry-Lubricated Molybdenum Trioxide Cylindrical Roller Thrust Bearings" Coatings 2022, 12, 591. https://doi.org/10.3390/coatings12050591 ist ein Axial-Zylinderrollenlager mit Wälzlagerringen bekannt, die ein Trockenschmiersystem auf Molybdänbasis aufweisenden, für das mittels physikalischer Gasphasenabscheidung (PVD) ein Molybdän (Mo)-Reservoir und darauf Molybdäntrioxid (MoOs) als Deckschicht aufgebracht wurde.

Es besteht ein ständiges Bedürfnis einen Verschleiß in einer Verzahnungsanordnung zu reduzieren.

Es ist die Aufgabe der Erfindung Maßnahmen aufzuzeigen, die eine verschleißarme Verzahnungsanordnung ermöglichen.

Die Lösung der Aufgabe erfolgt durch ein Verzahnungsanordnung mit den Merkmalen des Anspruchs 1, ein Getriebe mit den Merkmalen des Anspruch 9, eine Zahnkupplung mit den Merkmalen des Anspruchs 12, eine Verwendung mit den Merkmalen des Anspruchs 13, eine Verwendung mit den Merkmalen des Anspruchs 14 sowie ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können, wobei der Schutzbereich durch die Ansprüche bestimmt wird. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Verzahnungsanordnung zur Lastübertragung, mit einem ersten Zahn zum Einleiten einer Last und einem an dem ersten Zahn an einer Abstützfläche abstützbaren zweiten Zahn zum Ausleiten der Last, wobei der erste Zahn und/oder der zweite Zahn zumindest in der Abstützfläche mit einem Festschmierschichtsystem versehen ist, wobei das Festschmierschichtsystem eine mindestens ein metallisches Element aufweisende innere Reservoirschicht und eine eine Außenseite des Festschmierschichtsystems bildende Deckschicht aufweist, wobei die Deckschicht als Festschmierstoff ein aus dem metallischen Element der Reservoirschicht gebildetes Metalloxid aufweist.

Es wurde erkannt, dass es bei einer Verzahnungsanordnung möglich ist, anstelle einer Öl- oder Fett-Schmierung eine Feststoffschmierung vorzusehen, indem als Festschmierstoff ein Metalloxid verwendet wird, das durch eine Tribooxidation von metallischen Elementen unterhalb der Abstützfläche erst erzeugt und/oder regeneriert werden kann. Wenn für die Oberfläche der Zähne einer Verzahnungsanordnung ein Stahl und/oder ein eisenhaltiger Werkstoff verwendet wird, ist zu befürchten, dass das Eisen (Fe) im Werkstoff bei einer Tribooxidation zu Rost (FeO, Fe₂O₃) oxidiert, der zu zusätzlicher Abrasion in der Abstützfläche führt. Die Erfindung beruht auf der Erkenntnis, dass es auch Metalloxide gibt, beispielsweise MoOs, die nicht nur zu keinem abrasiven Verschleiß führen, sondern sogar als Festschmierstoff qualifizieren und deren Präsenz einen reibungsreduzierenden Effekt haben kann. Falls ein Teil der Deckschicht einem abrasiven Verschleiß ausgesetzt sein sollte, führen die abrasiv abgetrennten Festschmierstoff-Partikel aus der Deckschicht nicht zu einer Verstärkung des Verschleißes, sondern zu einer Verringerung der Reibung und/oder zu einer Verringerung des weiteren Verschleißes. Gleichzeitig ist es sogar möglich, dass die abrasiv abgetrennten Festschmierstoff-Partikel durch die normalweise als Schädigungsmechanismus betrachtete Tribooxidation regeneriert werden, indem die insbesondere elementar und/oder metallisch vorliegenden metallischen Elemente aus der Reservoirschicht oxidiert werden und dadurch die abrasiv abgetrennten Festschmierstoff-Partikel regenerativ ersetzen werden. Die Deckschicht kann durch die Tribooxidation in die Reservoirschicht hineinwandern und auf Kosten der Reservoirschicht eine ausreichend große Schichtdicke wiederherstellen. Tiefer liegende Bereiche der Reservoirschicht können durch die Oxidation der metallischen Elemente an dem zu Deckschicht weisenden Randbereich der Reservoirschicht vor Oxidationsprozessen geschützt werden, so dass die strukturelle Integrität und die chemische Zusammensetzung der gegebenenfalls geringfügig in ihrer Dicke geschrumpften Reservoirschicht nicht signifikant beeinträchtigt ist.

Ebenso wurde erkannt, dass in einer Verzahnungsanordnung Anwendungsfälle auftreten können, in denen im Vergleich zu einem Axial-Zylinderrollenlager deutlich geringere Flächenpressungen und deutlich geringere Temperaturen und Wärmeentwicklungen auftreten können, so dass einerseits mit einem geringeren abrasiven Verschleiß zu rechnen ist, aber anderseits die Betriebsbedingungen dennoch eine Regeneration von abrasiv abgetrennten Festschmierstoff-Partikeln durch Tribooxidation ermöglichen. Zudem sind in einer Verzahnungsanordnung im Vergleich zu einem Axial-Zylinderrollenlager in einem deutlich geringeren Ausmaß kontaktierende Gleit- und/oder Relativbewegungen unter Last zu erwarten, welche zu deutlich geringeren Verschleißeffekten führen. Ebenso sind bei den zu erwartenden Betriebsbedingungen der Verzahnungsanordnung Kaltverschweißungen in Bereich der Abstützflächen der aneinander gepressten Zähne nicht zu erwarten. Bei den in der Verzahnungsanordnung zu erwartenden Belastungen und Betriebsbedingungen kann eine rechtzeitige Regeneration der in einem eher geringen Ausmaß abgetrennter Festschmierstoff-Partikeln auch bei einer vergleichsweise langsamen Kinetik der Tribooxidation der metallischen Elemente aus der Reservoirschicht erfolgen. Die Betriebsbedingungen in der Verzahnungsanordnung können daher im Vergleich zu einem Axial-Zylinderrollenlager aufgrund der geringeren Flächenpressung einen geringeren Verschleiß durch Abrasion ermöglichen, während aber die Temperatur und die noch vorhandene geringere Flächenpressung immer noch ausreichen, dass die langsamere Kinetik der Tribooxidation eine rechtzeitige Regenerierung der in einem entsprechend geringeren Umfang abgetrennten Festschmierstoff-Partikel ermöglicht, wodurch eine besonders lange wartungsfreie Lebensdauer der Verzahnungsanordnung erreicht werden kann. Bei den typischen Betriebsbedingungen in der Verzahnungsanordnung kann durch Tribooxidation der metallischen Elemente aus der Reservoirschicht der Festschmierstoff in der Deckschicht leicht regeneriert werden, so dass eine verschleißarm geschmierte Verzahnungsanordnung ermöglicht ist.

Die Verzahnungsanordnung stellt einen Verzahnungseingrifft zwischen zwei separat ausgeführten Verzahnungspartnern her, indem der mindestens eine erste Zahn des ersten Verzahnungspartner über eine Zahnflanke an die Zahnflanke des mindestens zweiten Zahns des zweiten Verzahnungspartners drückt, um eine Last zu übertragen beziehungsweise abzustützen. Bei der Verzahnungsanordnung können beispielsweise zwei Zahnräder eine Stirnradverzahnung ausbilden, eine Innenverzahnung in eine Außenverzahnung eingreifen oder ein Ritzel mit einer Zahnstange zusammenwirken. Der erste Verzahnungspartner und der zweite Verzahnungspartner können eine Relativbewegung zueinander ausführen, bei welcher der erste Zahn auf dem zweiten Zahn abwälzt und ein nachfolgender erster Zahn auf dem nachfolgenden zweiten abwälzt und so weiter. Es ist aber auch möglich, dass in der Verzahnungsanordnung die Verzahnungspartner relativ zueinander stillstehen und vorwiegend lediglich statische Lasten abstützen, wobei die statischen Lasten sich in ihrem Betrag ändern können, wodurch infolge elastischer Verformungen der Zähne unter der anliegenden Last geringfügig Relativbewegungen der angepressten Abstützfläche der Zähne auftreten können.

Der erste Zahn und der zweite Zahn können insbesondere auf einer Evolventenverzahnung beruhen, bei der gegebenenfalls eine Flankenkorrektur zur Abwandlung der Evolventenverzahnung vorgenommen wurde. Es sind aber auch andere Verzahnungsformen möglichen.

Die Abstützfläche ist ein Flächenbereich des ersten Zahns und/oder des zweiten Zahns, in dem ein Anpressen der Zähne bei der Lastübertragung stattfindet. In der Regel liegt die Abstützfläche ausschließlich in den Zahnflanken der Zähne vor. Wenn in der Verzahnungsanordnung nur genau eine Lastrichtung vorgesehen ist, ist es sogar möglich, dass nur eine Zahnflanke eines Zahns als Abstützfläche verwendet wird, so dass es ausreichend sein kann nur an genau einer Zahnflanke des jeweiligen Zahns das Festschmierschichtsystem vorzusehen. Insbesondere können beide Zahnflanken des jeweiligen Zahns, besonders bevorzugt die gesamte Außenseite des Zahns, mit dem Festschmierschichtsystem versehen sein, um die Herstellung zu vereinfachen. Vorzugsweise ist das Festschmierschichtsystem entweder nur bei dem mindestens einen Zahn oder nur bei dem mindestens einen zweiten Zahn vorgesehen, so dass es möglich ist, das Festschmierschichtsystem nur bei einem der Verzahnungspartner der Verzahnungsanordnung vorzusehen, wodurch der Herstellungsaufwand für die Verzahnungsanordnung gering gehalten werden kann.

Das Festschmierschichtsystem ist insbesondere frei von Öl, Fett oder anderen separaten Schmiermitteln. Eine reibungsreduzierende Wirkung in der Art einer Schmierung zwischen den angepressten Zähnen im Bereich der Abstützfläche kann allein durch den in fester Phase vorliegenden Festschmierstoff erreicht werden. Da der Festschmierstoff ein Metalloxid ist, kann das für den Festschmierstoff vorgesehene metallische Element in der Reservoirschicht bevorratet werden und durch eine Oxidation, insbesondere Tribooxidation, aus der Reservoirschicht heraus erzeugt und in der Deckschicht eingebettet werden.

Der Festschmierstoff führt zu einem geringeren Reibungskoeffizienten zwischen dem ersten Zahn und dem zweiten Zahn im Bereich der Abstützfläche im Vergleich zu einem Reibungskoeffizienten an der selben Stelle, wenn der Festschmierstoff nicht vorhanden wäre. Metalloxide, die zu einem höheren Reibungskoeffizienten und/oder mehr Verschleiß führen, beispielsweise Rost (FeO, Fe₂O₃) qualifizieren nicht als Festschmierstoff. In der Regel weist der Festschmierstoff und das zugehörige Metalloxid eine Schichtstruktur vergleichbar zu Graphit und/oder eine plattenförmige Struktur vergleichbar zu PTFE auf. Durch die in der Abstützfläche auftretende Flächenpressung kann der Festschmierstoff an der Oberfläche des Festschmierschichtsystem und/oder an einer gegenüberliegenden Abstützfläche angepresst werden, wobei die in einer Verzahnungsanordnung zu erwartenden Flächenpressungen hoch genug sollten, dass der Festschmierstoff sich an den Unebenheiten der vorliegenden Oberflächenrauigkeiten festkrallen und/oder festklemmen kann und eine beispielsweise durch elastische Verformung verursachte Relativbewegung der aufeinander gepressten Abstützflächen an der ebenen Oberfläche des Festschmierstoffs mit einem geringeren Reibungskoeffizienten leichter und verschleißärmer abgleiten kann.

Die Reservoirschicht des Festschmierschichtsystem kann auf einen Kern des jeweiligen Zahns aufgebracht sein. Der Kern des jeweiligen Zahns kann aus einem Stahl hergestellt sein, auf dem die Reservoirschicht, insbesondere durch ein generatives Fertigungsverfahren und/oder Beschichtern, aufgebracht sein kann. Aufgrund der metallischen Elemente in der Reservoirschicht ist eine gute Bindungswirkung der Reservoirschicht an einem Stahlmaterial des jeweiligen Zahns zu erwarten. Insbesondere kann vorgesehen sein, dass metallische Elemente in das Stahlmaterial des Zahns durch Diffusion eingedrungen sind, wodurch eine bessere Bindungswirkung der Reservoirschicht erreicht werden kann. Die Reservoirschicht kann insbesondere aus mehreren übereinander aufgebrachten Lagen aufgebaut sein, um eine für die geplante Lebensdauer der Verzahnungsanordnung ausreichente Schichtdicke bereitstellen zu können. Besonders bevorzugt wird die Reservoirschicht in einer nicht oxidierenden Atmosphäre, beispielsweise mit Hilfe eines inerten Schutzgases aufgebracht, um eine Oxidation der metallischen Elemente in der Reservoirschicht zu vermeiden.

Die Deckschicht des Festschmierschichtsystem kann eine der Umgebung beziehungsweise eines mechanischen Kontakts in der Abstützfläche ausgesetzte Außenseite des Festschmierschichtsystem und des zugehörigen Zahns ausbilden. Die Deckschicht im Verhältnis zur Reservoirschicht außerhalb vorgesehen, während die Reservoirschicht im Verhältnis zur Deckschicht innerhalb vorgesehen ist. Es ist möglich, dass sich die Deckschicht gegebenenfalls über einen Diffusionsbereich unmittelbar an der Reservoirschicht anschließt oder über eine, insbesondere genau eine, Zwischenschicht an der Reservoirschicht angebunden ist, wobei die Zwischenschicht vorzugsweise als Haftvermittler wirken kann. Aufgrund des Festschmierstoffs in der Deckschicht kann die Außenseite der Deckschicht und des Festschmierschichtsystems einen besonders geringen Reibungskoeffizienten aufweisen, so dass durch diese Art der Feststoffschmierung ein geringer Verschleiß durch Abrasion erreicht werden kann.

Das metallische Element, das durch Oxidation zu einem Metalloxid reagieren soll, ist grundsätzlich jedes chemische Element, das sich im Periodensystem der Elemente links und unterhalb einer Trennungslinie von Bor bis Astat befindet und insbesondere auch die Gruppe der Halbmetalle umfasst und als metallische Bindung in fester Phase vorliegen kann. Geeignete metallische Elemente zeichnen sich dadurch aus, dass ihre oxidierte Form einen Festschmierstoff mit einem reibungsreduzierenden Effekt ausbilden können und bei den in der Verzahnungsanordnung zu erwartenden Betriebsbedingungen durch Tribooxidation in einer tribochemischen Reaktion oxidiert werden können.

Die Tribooxidation ist eine Oxidation eines Reaktionspartners unter mechanischer Einwirkung. Infolge der Betriebsbedingungen der Verzahnungsanordnung kann im Bereich der aufeinander angepressten Abstützflächen der einander anliegenden Zähne eine Temperatur und ein Druck vorliegen, der einer Oxidation eines für Luftsauerstoff zugänglichen metallischen Elements der Reservoirschicht zu dem den Festschmierstoff ausbildenden Metalloxid zulässt. Insbesondere kann vorgesehen sein, dass die metallischen Elemente der Reservoirschicht bei Normaldruck (1 bar) und Raumtemperatur (20°C) selbst dann nicht oxidieren, wenn sie Luftsauerstoff ausgesetzt sind, da bei solchen Randbedingen keine ausreichende Aktivierungsenergie für die Oxidation vorliegt. Dadurch kann sichergestellt werden, dass keine unabsichtliche Oxidation der metallischen Elemente der Reservoirschicht, sondern nur eine Tribooxidation im laufenden Betrieb der Verzahnungsanordnung erfolgen kann.

Die Betriebsbedingungen in der Verzahnungsanordnung führen insbesondere zu einer, beispielsweise bei Drehmomentstößen auftretende, maximalen Flächenpressung pₘₐₓ in der Abstützfläche von 500 N/mm² ≤ pₘₐₓ ≤ 900 N/mm², insbesondere
600 N/mm² ≤ pₘₐₓ ≤ 700 N/mm², während vorzugsweise im regulären Normalbetrieb eine Flächenpressung p von 150 N/mm² ≤ p ≤ 500 N/mm², insbesondere
p = 300 N/mm² ± 50 N/mm² vorherrscht. Infolge von Wärmeentwicklungen im Bereich der Verzahnungsanordnung ist bei den Betriebsbedingungen insbesondere von einer Temperatur T im Bereich der Abstützfläche von 20°C ≤ T ≤ 80°C, vorzugsweise 23°C ≤ T ≤ 50°C und besonders bevorzugt 25°C ≤ T ≤ 30°C.

Insbesondere ist zwischen der Reservoirschicht und der Deckschicht eine Zwischenschicht zur Verbindung der Deckschicht mit der Reservoirschicht vorgesehen, wobei die Zwischenschicht ein aus dem metallischen Element der Reservoirschicht gebildetes Metalloxid mit einer niedrigeren Oxidationszahl als das Metalloxid der Deckschicht aufweist. Die Zwischenschicht kann vorzugsweise als Haftvermittler zwischen der Deckschicht und der Reservoirschicht wirken, um eine gute Anbindung der Deckschicht zu ermöglichen. Zudem ist es möglich, dass in dem Fall, dass der Festschmierstoff in der Deckschicht ein Metalloxid mit einer höheren Oxidationszahl, beispielsweise MoOs sein soll, bei der Oxidation der metallischen Elemente der Reservoirschicht zunächst ein Metalloxid mit einer niedrigeren Oxidationszahl als Zwischenprodukt erzeugt wird, beispielsweise MoO₂, das zunächst in der Zwischenschicht verbleibt, bis es zu dem Festschmierstoff mit der höheren Oxidationszahl weiter oxidiert wird. Aufgrund der Ähnlichkeit der Elemente kann, insbesondere durch Diffusion, eine gute Anbindung der schichten und ein guter Stofftransport des ganz oder teilweise oxidierten metallischen Elements an die Außenseite ermöglicht werden.

Vorzugsweise sind abrasiv abgetrennte Metalloxid-Elemente der Deckschicht durch eine Oxidation der metallischen Elemente der Reservoirschicht regenerierbar. Wenn ein den Festschmierstoff ausbildendes Metalloxid abrasiv abgetrennt wird, ist es zunächst möglich, dass das abgetrennte Metalloxid-Element in der Abstützfläche wieder angepresst wird. Falls das abgetrennte Metalloxid-Element aus dem Verzahnungsbereich vollständig entfernt werden sollte, kann dieses Festschmierstoff-Partikel die Außenseite der Deckschicht nicht mehr abdecken, so dass die Deckschicht leichter von Luftsauerstoff penetriert werden kann. Wenn dieser in die Deckschicht eingedrungene Luftsauerstoff auf ein metallisches Element der Reservoirschicht trifft, kann durch Tribooxidation das metallische Element oxidiert werden, insbesondere zu dem Metalloxid, das den Festschmierstoff darstellt, wodurch das entfernte Festschmierstoff-Partikel ersetzt und dadurch regeneriert werden kann, ohne dass hierzu eine Reparatur oder Wartung erforderlich ist.

Besonders bevorzugt weist die Deckschicht als Festschmierstoff MoO₂ und/oder MoOs und/der die Reservoirschicht Mo als metallisches Element aufweist. Untersuchungen haben gezeigt, dass Molybdän als metallisches Element in der Reservoirschicht durch Tribooxidation zu dem Festschmierstoff MoO₂ und/oder MoOs oxidiert werden kann, wodurch eine automatische Regenration des Festschmierstoff in der Deckschicht ermöglicht ist. Es sind aber auch weitere metallische Elemente denkbar, die in ihrer oxidierten Form einen reibungsreduzierten Effekt haben und bei den in der Verzahnungsanordnung auftretenden Betriebsbedingungen durch Tribooxidation erzeugt werden können.

Insbesondere weist die Deckschicht PTFE und/oder Kohlenstoff, beispielsweise Graphit, auf. Zusätzlich zu dem aus dem Metalloxid gebildeten Festschmierstoff können in der Deckschicht auch weitere reibungsreduzierende Bestandteile, die vorzugsweise ebenfalls einen Festschmierstoff ausbilden, vorgesehen sein. Dadurch kann insbesondere eine Anbindung des dem Metalloxid gebildeten Festschmierstoff, der zu einem späteren Zeitpunkt erst aus den metallischen Elementen der Reservoirschicht gebildet wurde, verbessert werden. Beispielsweise können in der Abstützfläche angepresste PTFE- und/oder Graphit-Schichten ein Herausfallen eines durch Tribooxidation regenerierten Metalloxids aus der Schichtmatrix der Deckschicht erschweren, so dass das Risiko eines Verlusts des aus dem Metalloxid gebildeten Festschmierstoff durch abrasiven Verschleiß reduziert werden kann.

Vorzugsweise weist die Deckschicht und/oder die Reservoirschicht Nanoröhrchen auf, wobei insbesondere das Nanoröhrchen Kohlenstoff und/oder Molybdän aufweist. Das Nanoröhrchen kann beispielsweise aus Kohlenstoff und/oder Molybdän aufgebaut sein und unter Druck in der Abstützfläche schichtartig zusammengepresst werden, wodurch eine ebene und abriebfeste Obernflächengestaltung mit einem geringen Reibungskoeffizienten bereitgestellt werden kann. Besonders bevorzugt ist das Nanoröhrchen zumindest teilweise mit weiteren Bestandteilen gefüllt, beispielswiese Graphit- und/oder PTFE-Partikeln, die unter Druck aus dem Nanoröhrchen herausgepresst werden können und auch im Umfeld des Nanoröhrchen einen reibungsreduzierenden Effekt bereitstellen können.

Besonders bevorzugt sind die Deckschicht und/oder die Reservoirschicht durch ein Beschichtungsverfahren, insbesondere PVD, aufbracht. Dies ermöglicht es bestimmte vordefinierte Schichtdicken gegebenenfalls durch das Aufbringen mehrerer Lagen übereinander für die Deckschicht und/oder die Reservoirschicht auszubilden.

Insbesondere ist vorgesehen, dass die Deckschicht eine Schichtdicke d von
20 nm ≤ d ≤ 120 nm, insbesondere 40 nm ≤ d ≤ 100 nm und vorzugsweise 60 nm ≤ d ≤ 80 nm und/oder die Reservoirschicht eine Schichtdicke D von 0,5 µm ≤ D ≤ 4,0 µm, insbesondere 0,8 µm ≤ D ≤ 2,0 µm und vorzugsweise 1,0 µm ≤ D ≤ 1,5 µm aufweist. Bei einer derartigen Bemessung der Schichtdicken ist eine lange, insbesondere wartungsfreie, Lebensdauer für die Verzahnungsanordnung und das Festschmierschichtsystem zu erwarten.

Ein weiterer Aspekt betrifft ein Getriebe, insbesondere für ein Schienenfahrzeug, mit einer Verzahnungsanordnung, die wie vorstehend beschrieben aus- und weitergebildet sein kann, zur Übertragung einer Getriebeleistung. Vorzugsweise ist die Verzahnungsanordnung Teil einer Stirnradverzahnung. Besonders bevorzugt ist die Verzahnungsanordnung Teil einer Planetenradverzahnung, wobei die Planetenradverzahnung ein Plantenrad eines Planetengetriebes und eine mit dem Plantenrad verzahntes Hohlrad ist. Bei den typischen Betriebsbedingungen in der Verzahnungsanordnung des Getriebes kann durch Tribooxidation der metallischen Elemente aus der Reservoirschicht der Festschmierstoff in der Deckschicht leicht regeneriert werden, so dass eine verschleißarm geschmierte Verzahnungsanordnung des Getriebes ermöglicht ist.

Ein weiterer Aspekt betrifft eine Zahnkupplung zum Kuppeln einer Eingangswelle mit einer Ausgangswelle, mit einer Innenverzahnung und einer an der Innenverzahnung abgestützten Außenverzahnung, wobei zwischen der Innenverzahnung und der Außenverzahnung eine Verzahnungsanordnung, die wie vorstehend beschrieben aus- und weitergebildet sein kann. Die Zahnkupplung kann in einer industriellen Windkraftanlage vorgesehen sein. Die Windkraftanlage kann für eine industrielle Stromerzeugung ausgestaltet sein und ist in der Regel insbesondere für eine Nennleistung von mindestens 2 MW, vorzugsweise mindestens 5 MW und besonders bevorzugt von mindestens 15 MW dimensioniert und insbesondere für den Offshore-Betrieb ausgelegt, was eine entsprechende Leistungsdichte in der Getriebeleistung und entsprechende Größenverhältnisse für die Komponenten der Windkraftanlage, insbesondere der Verzahnungsanordnung als Teil des Getriebes, impliziert. Vorzugsweise ist die Zahnkupplung im Antriebsstrang eines Schienenfahrzeugs, beispielsweise in Leistungsflussrichtung zwischen einem Antriebsmotor und/oder Getriebe einerseits und einem Antriebsrad andererseits vorgesehen, insbesondere um eine drehbare und vorzugsweise auch verkippbare drehmomentübertragende Anbindung des auf einer Schiene aufliegenden Antriebsrads zu einem höhenveränderlichen Waggon herbeizuführen. Im Vergleich zu einer relativ beweglichen Verzahnung in einem Getriebe ist in der Zahnkupplung mit besonders geringen Relativbewegungen im Bereich der Abstützflächen zu rechnen. Bei den typischen Betriebsbedingungen in der Verzahnungsanordnung der Zahnkupplung kann durch Tribooxidation der metallischen Elemente aus der Reservoirschicht der Festschmierstoff in der Deckschicht leicht regeneriert werden, so dass eine verschleißarm geschmierte Verzahnungsanordnung der Zahnkupplung ermöglicht ist.

Ein weiterer Aspekt der Erfindung betrifft eine Verwendung einer Verzahnungsanordnung, die wie vorstehend beschrieben aus- und weitergebildet sein kann, bei einer zur Oxidation der metallischen Elemente der Reservoirschicht zum Festschmierstoff der Deckschicht ausreichenden Temperatur und Flächenpressung. Bei den typischen Betriebsbedingungen in der Verzahnungsanordnung kann durch Tribooxidation der metallischen Elemente aus der Reservoirschicht der Festschmierstoff in der Deckschicht leicht regeneriert werden, so dass eine verschleißarm geschmierte Verzahnungsanordnung ermöglicht ist.

Ein weiterer Aspekt der Erfindung betrifft eine Verwendung einer Verzahnungsanordnung, die wie vorstehend beschrieben aus- und weitergebildet sein kann, bei einer zur Übertragung des Festschmierstoffs der Deckschicht von dem ersten Zahn auf den zweiten und/oder von dem zweiten Zahn auf den ersten Zahn ausreichenden Temperatur und Flächenpressung. Falls sich ein Festschmierstoff-Partikel aus der Deckschicht lösen sollte, ist es möglich dieses Festschmierstoff-Partikel in der Abstützfläche des jeweils anderen Zahns anzupressen und dadurch eine allmähliche Beschichtung des nicht mit dem Festschmierschichtsystem versehenen Zahns herbeizuführen, so dass auch der ursprünglich nicht mit einem Festschmierstoff versehene Zahn zumindest bereichsweise eine reibungsreduzierende Oberfläche erhalten kann. Eine Abrasion der Deckschicht kann dadurch sogar zu einem zusätzlichen reibungsreduzierenden Schmiereffekt durch den anpresste Festschmierstoff führen. Bei den typischen Betriebsbedingungen in der Verzahnungsanordnung kann durch Tribooxidation der metallischen Elemente aus der Reservoirschicht der Festschmierstoff in der Deckschicht leicht regeneriert werden, so dass eine verschleißarm geschmierte Verzahnungsanordnung ermöglicht ist.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Verzahnungsanordnung, die wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile der Verzahnungsanordnung, insbesondere durch 3D-Druck, und/oder bei einer Verarbeitung durch eine Datenverarbeitungseinrichtung zur Durchführung einer technischen Simulation eine Simulation der Funktionsweise der Verzahnungsanordnung, durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen

Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise der betrachteten Vorrichtung zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können, wobei der Schutzbereich durch die Ansprüche bestimmt wird. Wenn ein Merkmal in den nur exemplarischen Zeichnungen und der zugehörigen Beschreibung in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann. Es zeigen:
Fig. 1: eine schematische Schnittansicht Doppelgelenkkupplung für ein Schienenfahrzeug,
Fig. 2: eine schematische perspektivische Ansicht eines Zahns einer Zahnkupplung der Doppelgelenkkupplung aus Fig. 1 und
Fig. 3: eine schematische Schnittansicht eines Details des Zahns aus Fig. 2.

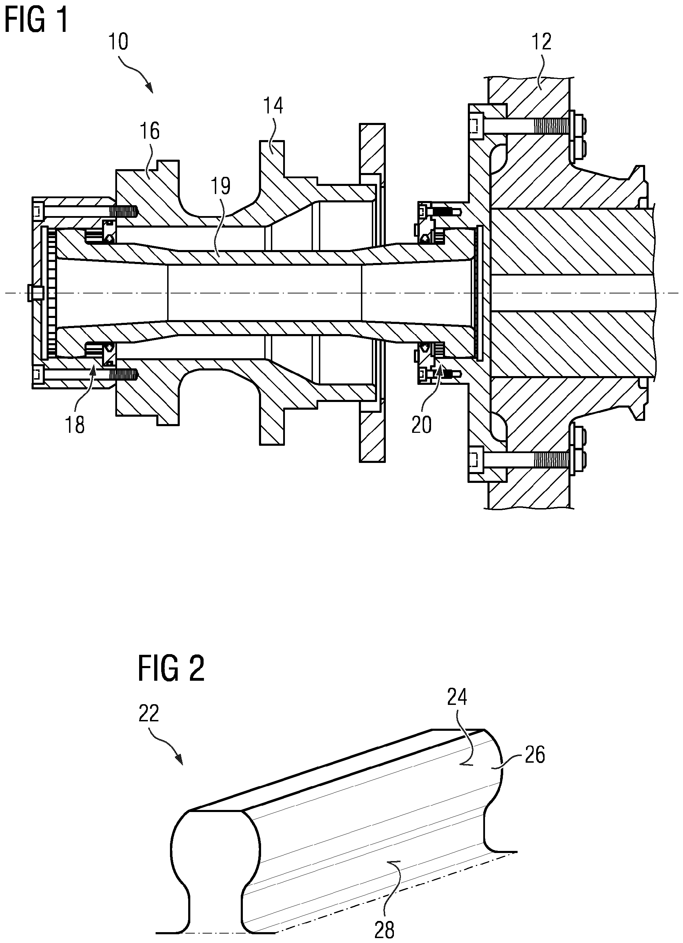

Die in Fig. 1 dargestellte Doppelgelenkkupplung 10 für ein Schienenfahrzeug kann eine auf einer Schiene abrollende Radnabe 12 mit einem höhenverstellbaren Wagon koppeln. In dem höhenverstellbaren Wagon kann ein Getriebe und/oder ein Antriebsmotor vorgesehen sein, wobei eine Antriebsleistung über eine Stirnradverzahnung in ein Außenzahnrad 14 eines Gehäuses 16 der Doppelgelenkkupplung 10 eingeleitet werden kann. Über eine als Bogenverzahnung ausgestaltete erste Zahnkupplung 18 kann die Antriebsleistung an eine verkippbare, insbesondere als durchgängige Hohlwelle ausgestaltete, Welle 19 übertragen werden, die über eine, insbesondere ebenfalls als Bogenverzahnung und/oder Keilpaketkupplung ausgestaltete, zweite Zahnkupplung 20 die Antriebsleistung an die Radnabe 12 überträgt. Die Stirnradverzahnung mit dem Außenzahnrad 14, die erste Zahnkupplung 18 und/oder die zweite Zahnkupplung 20 können feststoffgeschmiert ausgestaltet sein.

Ein in Fig. 2 exemplarisch dargestellter erster Zahn 22 kann Teil eines ersten Verzahnungspartners der feststoffgeschmierten Stirnradverzahnung mit dem Außenzahnrad 14, der erste Zahnkupplung 18 und/oder der zweite Zahnkupplung 20 sein und mit einem nicht dargestellten zweiten Zahn eines zweiten Verzahnungspartner zusammenwirken. Der zweite Zahn 22 weist zumindest in einer Abstützfläche 24, an der die Zähne aufeinandergepresst werden, ein Festschmierschichtsystem 26 auf. Der zweite Zahn kann ebenfalls ein weiteres Festschmierschichtsystem aufweisen, wobei vorzugsweise nur einer der miteinander zusammenwirkenden Verzahnungspartner das Festschmierschichtsystem 26 aufweist. Vorzugsweise ist das Festschmierschichtsystem 26 über die gesamte den entsprechenden Zahn einschließende Mantelfläche 28 des entsprechenden Verzahnungspartners ausgebildet, wobei vorzugsweise auch die Axialseiten des Verzahnungspartners mit dem Festschmierschichtsystem 26 versehen sind.

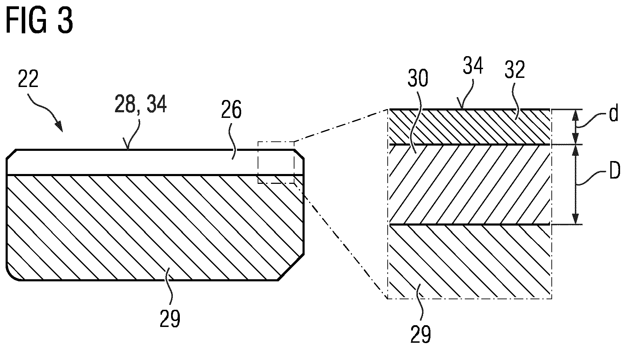

Wie in Fig. 3 dargestellt kann das Festschmierschichtsystem 26 auf dem Material 29 des ersten Zahns 22, insbesondere Stahl, aufgebracht sein. Das Festschmierschichtsystem 26 weist eine sich insbesondere an dem Material 29 des ersten Zahns 22 anschließende innere Reservoirschicht 30 auf, die beispielswiese eine Schichtdicke D von ca. 2 µm aufweist. Das Festschmierschichtsystem 26 weist zudem eine Deckschicht 32 auf, die eine der Umgebung ausgesetzte Außenseite 34 ausbildet und direkt oder über eine Zwischenschicht mit der Reservoirschicht 30 verbunden ist. Die Deckschicht 32 weist beispielsweise eine Schichtdicke d von ca. 100 nm auf. Die Reservoirschicht 30 und/oder die Deckschicht 32 können insbesondere über Diffusionsbereiche mit dem jeweils benachbarten Material verbunden sein. Vorzugsweise sind die Reservoirschicht 30 und/oder die Deckschicht 32 als PVD-Beschichtung aufgebracht worden.

Die Reservoirschicht 30 kann metallische Elemente, insbesondere Mo, enthalten, während die Deckschicht 32 als Festschmierstoff das entsprechende Metalloxid, insbesondere MoO₂ und/oder MoOs, aufweist. Falls ein den Festschmierstoff ausbildendes Metalloxid-Partikel verloren gehen sollte, kann das metallische Element aus der Reservoirschicht 30 durch Tribooxidation oxidiert werden und das verlorengegangene Festschmierstoff-Partikel regenerativ ersetzen.

## Patentansprüche

1. Verzahnungsanordnung zur Lastübertragung, mit
einem ersten Zahn (22) zum Einleiten einer Last und
einem an dem ersten Zahn (22) an einer Abstützfläche (24) abstützbaren zweiten Zahn zum Ausleiten der Last,
wobei der erste Zahn (22) und/oder der zweite Zahn zumindest in der Abstützfläche (24) mit einem Festschmierschichtsystem (26) versehen ist, wobei das Festschmierschichtsystem (26)
eine mindestens ein metallisches Element aufweisende innere Reservoirschicht (30) und
eine eine Außenseite (34) des Festschmierschichtsystems (26) bildende Deckschicht (32) aufweist,
wobei die Deckschicht (32) als Festschmierstoff ein aus dem metallischen Element der Reservoirschicht (30) gebildetes Metalloxid aufweist.

2. Verzahnungsanordnung nach Anspruch 1, wobei zwischen der Reservoirschicht (30) und der Deckschicht (32) eine Zwischenschicht zur Verbindung der Deckschicht (32) mit der Reservoirschicht (30) vorgesehen ist, wobei die Zwischenschicht ein aus dem metallischen Element der Reservoirschicht (30) gebildetes Metalloxid mit einer niedrigeren Oxidationszahl als das Metalloxid der Deckschicht (32) aufweist.

3. Verzahnungsanordnung nach Anspruch 1 oder 2, wobei abrasiv abgetrennte Metalloxid-Elemente der Deckschicht (32) durch eine Oxidation der metallischen Elemente der Reservoirschicht (30) regenerierbar sind.

4. Verzahnungsanordnung nach einem der Ansprüche 1 bis 3, wobei die Deckschicht (32) als Festschmierstoff MoO₂ und/oder MoOs und/der die Reservoirschicht (30) Mo als metallisches Element aufweist.

5. Verzahnungsanordnung nach einem der Ansprüche 1 bis 4, wobei die Deckschicht (32) PTFE und/oder Kohlenstoff aufweist.

6. Verzahnungsanordnung nach einem der Ansprüche 1 bis 5, wobei die Deckschicht (32) und/oder die Reservoirschicht (30) Nanoröhrchen aufweist.

7. Verzahnungsanordnung nach einem der Ansprüche 1 bis 6, wobei die Deckschicht (32) und/oder die Reservoirschicht (30) durch ein Beschichtungsverfahren aufbracht sind.

8. Verzahnungsanordnung nach einem der Ansprüche 1 bis 7, wobei die Deckschicht (32) eine Schichtdicke d von 20 nm ≤ d ≤ 120 nm, insbesondere 40 nm ≤ d ≤ 100 nm und vorzugsweise 60 nm ≤ d ≤ 80 nm und/oder die Reservoirschicht (30) eine Schichtdicke D von 0,5 µm ≤ D ≤ 4,0 µm, insbesondere 0,8 µm ≤ D ≤ 2,0 µm und vorzugsweise 1,0 µm ≤ D ≤ 1,5 µm aufweist.

9. Getriebe, insbesondere für ein Schienenfahrzeug, mit einer Verzahnungsanordnung nach einem der Ansprüche 1 bis 8 zur Übertragung einer Getriebeleistung.

10. Getriebe nach Anspruch 9, wobei die Verzahnungsanordnung Teil einer Stirnradverzahnung ist.

11. Getriebe nach Anspruch 9 oder 10, wobei die Verzahnungsanordnung Teil einer Planetenradverzahnung ist, wobei die Planetenradverzahnung ein Plantenrad eines Planetengetriebes und eine mit dem Plantenrad verzahntes Hohlrad ist.

12. Zahnkupplung (18, 20) zum Kuppeln einer Eingangswelle mit einer Ausgangswelle, mit einer Innenverzahnung und einer an der Innenverzahnung abgestützten Außenverzahnung, wobei zwischen der Innenverzahnung und der Außenverzahnung eine Verzahnungsanordnung nach einem der Ansprüche 1 bis 8 ausgebildet ist.

13. Verwendung einer Verzahnungsanordnung nach einem der Ansprüche 1 bis 8 bei einer zur Oxidation der metallischen Elemente der Reservoirschicht (30) zum Festschmierstoff der Deckschicht (32) ausreichenden Temperatur und Flächenpressung.

14. Verwendung einer Verzahnungsanordnung nach einem der Ansprüche 1 bis 8 bei einer zur Übertragung des Festschmierstoffs der Deckschicht (32) von dem ersten Zahn (22) auf den zweiten und/oder von dem zweiten Zahn auf den ersten Zahn (22) ausreichenden Temperatur und Flächenpressung.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Verzahnungsanordnung nach einem der Ansprüche 1 bis 8 vorgesehenen Bestandteile, wobei die Datenpakete dazu hergerichtet sind
bei einer Verarbeitung durch eine Datenverarbeitungseinrichtung zum Betrieb einer Werkzeugmaschine zur additiven Fertigung von Vorrichtungen eine additive Herstellung der Bestandteile der Verzahnungsanordnung, insbesondere durch 3D-Druck, durchzuführen
und/oder
bei einer Verarbeitung durch eine Datenverarbeitungseinrichtung zur Durchführung einer technischen Simulation eine Simulation der Funktionsweise der Verzahnungsanordnung durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
